Europäisches Patentamt

**European Patent Office**

**Office européen des brevets**

(19)

(11) **EP 1 510 139 A1**

(12) # EUROPEAN PATENT APPLICATION

(43) Date of publication:
**02.03.2005 Bulletin 2005/09**

(51) Int Cl.⁷: **A23L 1/217**, A23L 1/00,
A23L 1/01, C09J 103/06

(21) Application number: **04019486.2**

(22) Date of filing: **17.08.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **22.08.2003 US 646429**

(71) Applicant: **National Starch and Chemical
Investment Holding Corporation
New Castle, Delaware 19720 (US)**

(72) Inventors:
• **Billmers, Robert L.**
**Stockton New Jersey 08559 (US)**
• **Shi, Yong-Cheng**
**Hillsborogh New Jersey 08844 (US)**
• **Dihel, Deborah L.**
**Whitehouse Station New Jersey 08889 (US)**

(74) Representative: **Hagemann, Heinrich et al
Meissner, Bolte & Partner
Anwaltssozietät GbR
Postfach 86 03 29
D-81630 München (DE)**

(54) **Starches for reduced-fat fried food systems**

(57)    This patent pertains to starch coatings containing starch succinates for reduced fat fried foods with acceptable taste, texture and appearance. The starches of this invention are applied to the food substrate before frying and act as a barrier to the absorption of the frying media (oil).

EP 1 510 139 A1

**Description**

BACKGROUND OF THE INVENTION

The present invention relates to a method of preparing fried foods with a low fat content and the resultant food products.

Fried foods, such as french fries, are commonplace in the diet. Batter coated potato products are known in the art and exemplified by US Patent Numbers 5,141,759; 5,601,861; 5,620,727; 5,648,110; and 6,033,967, However, due to health and diet concerns, many people have reduced or even eliminated fried foods from their diet.

Reduced fat (oil) fried food compositions are also known in the market. However, many of these suffer in taste, texture and/or appearance, or do not have a significant reduction of fat. Baking, instead of frying, or frying for a more limited amount of time often produces reduced fat products. Coating the product to prevent fat absorption as exemplified by US Patent Number 6,290,999 may also produce reduced fat products. Despite the advances in this field, there remains a need for fried food products, which have reduced fat content, yet remain organoleptically similar to traditional fried foods, which do not have a reduced fat content.

Surprisingly, it has now been discovered that reduced fat fried foods with acceptable taste, texture and appearance may be achieved with a coating of a single starch.

SUMMARY OF THE INVENTION

This patent pertains to reduced fat fried foods with acceptable taste, texture, and appearance which may be achieved by applying starch succinate to the food.

DETAILED DESCRIPTION OF THE INVENTION

This patent pertains to reduced fat fried foods with acceptable taste, texture, and appearance which may be achieved by applying starch succinate to the food item prior to frying.

The fried food may be any edible product which is to be fried, particularly fish, meat, poultry or meat-substitute portions such as fish stix and chicken nuggets, cheese such as mozzarella sticks, breads, and fruits and vegetables including onions, zucchini, carrots, eggplant, apples and potatoes. Most suitable for this invention are fried vegetables, more particularly fried potatoes such as french fries.

The food portion is first prepared for coating. For example, a vegetable is typically cleaned, optionally peeled, and may be cut into strips or other shapes. Potatoes may be cut into strips of the desired size and shapes for french fries, including without limitation shoestring potatoes, crinkle cuts, and straight cuts. The vegetables are optionally blanched according to conventional procedures to inactivate enzymes, gelatinize naturally occurring starches, remove excess free sugars to reduce Maillard browning, and/or par-cook the vegetable. Typically immersion in water at a temperature of from about 70 to about 99°C or exposure to steam (at ambient or higher pressures) for about 2 to about 15 minutes, depending upon the amount of blanching desired blanches the vegetables. In a preferred embodiment the vegetables are blanched with a 0.5% calcium chloride solution and then dried.

An aqueous solution of the starch succinate is then applied to the dried blanched food articles. The starch may be applied using any method known in the art including without limitation by dipping, spraying, extruding, or dry coating such as dusting. Although not necessary, multiple layers of the starch solution or dispersion may be used. In the alternative these starch succinates may be added to the blanch water for application during blanking. Upon application, the starch not only forms a coating on the food surface, but will typically also penetrate the food. The amount of starch, type, penetration, and possible crosslinking is directly related to the amount of fat uptake and thus reduction of fat by the food.

Typical sources for the starches are cereals, tubers, roots, legumes and fruits. The native source can be any variety of corn (maize), pea, potato, sweet potato, banana, barley, wheat, rice, oat, sago, amaranth, tapioca, arrowroot, canna, sorghum, and waxy and high amylose varieties thereof. As used herein, "waxy" is intended to include a starch containing no more than about 10%, particularly no more than about 5%, more particularly no more than about 3%, and most particularly no more than about 1% amylose by weight. As used herein, the term "high amylose" is intended to include a starch containing at least about 40%, particularly at least about 70%, more particularly at least about 80% by weight amylose.

The starches may be hydrolyzed, and suitable starches include fluidity or thin boiling starches prepared by oxidation, acid hydrolysis, enzyme hydrolysis, and heat and or acid dextrinization. These processes are well known in the art. In a particularly useful embodiment, the starches are hydrolyzed to a water fluidity (wf) of at least about 30, more particularly at least about 50, and no more than about 85. Water fluidity is a well known relative measurement of the viscosity compared to native starch (WF=0) and water (WF =100).

The starches of this invention are modified with succinic anhydride to provide the functionality. The reaction of succinic anhydride with starch is well known in the literature and can be accomplished in various reaction media. While treatment with any level of reagent will provide some performance in the final application, suitable starches will be treated with at least about 1 %, particularly at least about 2.5% succinic anhydride, and no more than about 4% succinic anhydride.

The starch may be further chemically modified, including without limitation, crosslinked, acetylated, organically esterified, hydroxyethylated, hydroxypropylated, phosphorylated, inorganically esterified, cationic, anionic, nonionic, and zwitterionic, and substituted succinate derivatives thereof. Such modifications are known in the art, for example in Modified Starches: Properties and Uses, Ed. Wurzburg, CRC Press, Inc., Florida (1986). One skilled in the art would recognize the ester linkage of the succinate would be labile under certain reaction conditions. Where optional derivatization is desired, it may be necessary to after the order of modification so as not to hydrolyze the succinate ester during further reaction (i.e. etherification).

The starches of this invention may also be pregelatinized using techniques known in the art and disclosed for example in U.S. Patent Nos. 4,465,702, 5,037,929, 5,131,953, and 5,149,799. Also see, Chapter XXII-"Production and Use of Pregelatinized Starch", Starch: Chemistry and Technology, Vol. III- Industrial Aspects, R.L. Whistler and E.F. Paschall, Editors, Academic Press, New York 1967,

Any starch having suitable properties for use herein may be purified by any method known in the art to remove starch off flavors and colors that are native to the polysaccharide or created during processing. Suitable purification processes for treating starches are disclosed in the family of patents represented by EP 554 818 (Kasica, et al.). Alkali washing techniques, for starches intended for use in either granular or pregelatinized form, are also useful and described in the family of patents represented by U.S. 4,477,480 (Seidel) and 5,187,272 (Bertalan et al.).

To further alter and control the properties of fat reducing coating, it is within the scope of this invention to use a blend of two or more starches modified with succinic anhydride and they can be applied to the food article simultaneously or in subsequent steps to achieve a variety of additional properties (eg. crispiness).

The starch succinate coating is prepared by dissolving or dispersing the starch or starch blend in water and may be adjusted to the desired pH according to its intended end use. The starch may be solublized by techniques known in the art, such as cooking. The starch succinate may be made cold water swelling by drum drying or spray cooking, etc. to avoid the cooking step. In general, the pH is adjusted to from about 5.0 to about 7.5, particularly from about 6.0 to about 7.0, using techniques known in the art. If further purification of the starch is desired, reaction impurities and by-products may be removed by dialysis, filtration, centrifugation or any other method known in the art for isolating and concentrating starch compositions. For example, a converted starch may be washed using techniques known in the art to remove soluble low molecular weight fractions, such as oligosaccharides.

One skilled in the art would typically be able to modify the amount of starch succinate to achieve the desired amount of fat reduction and other functional and organoleptic properties. However; typical amounts of starch succinates will be in the range of about 0.1 to about 10%, more suitably 0.5 to 5%, most suitably 0.7 to about 1% based on the total weight of the food article.

Other starches in addition to the starch succinate may be added to change the organoleptic properties of the coating. Such selection of the starch coating materials is dependent upon the desired texture, taste and appearance of the fried food product and is within the skill of the artisan. Inclusion of a flour, such as rice, corn or wheat flour, reduces oil content. However, high levels, particularly at a level of more than about 13% by weight of the starch material, impairs the texture of the fried food. Ungelatinized cross-linked starches may be used in enrobing slurries (e.g. 40-60%) to minimize sticking or clumping of the strips during processing, and coat the potato strips more evenly. Cross-linked starches may be used to contribute a flat, non-glossy finish, tender texture and crispiness. Starches containing high amylose levels are good film formers due to the associations among the linear amylose polymers. By providing a strong resilient film, these starches are added to the batter (8-25%) to provide a flat coating appearance, coating strength and crispiness. High amylose starches also provide some suspension properties. Dextrins, with a quicker hydration rate, create a delicate, brittle film to improve crispiness, improve cohesion and roughen the surface. At the typical use level, between 8-15%, dextrins also provide a tender bite and snap, and very good heat hold.

Minor amounts (0.5 to 3.0%) of pre-gelatinized starches may be used to provide viscosity control and suspension of the solids in the batter. The selection of the pre-gelatinized starch must be made carefully to avoid excessive batter viscosity which promotes blow off. Further, waxy starches, other than the succinate starch, should be limited to prevent stickiness and other attributes that are typically considered undesirable. Waxy starches may be used in small amounts, if at all, particularly less than about 10%, more particularly less than about 5%, by weight.

Optional additives may be added, but are not necessary, including salts such as mono- and polyvalent salts; sugars; plasticizers such as propylene glycol, glycerol, sorbitol, propylene glycol monostearate, glycerol monostearate, and polyethylene glycol; inert materials such as celite, cellulose, and silica; and solvents such as water, ethanol, isopropanol, ethyl acetate, binary and tertiary materials. Particularly suitable is the addition of salts to the starch coating at a level of at least about 5%, particularly at least about 8% and no more than about 15%, particularly no more than about 12%, by weight of the starch coating. Also particularly suitable is the use of leavening agents, for example SAPP (sodium acid pyrophosphate) in the starch slurry, to provide crisping and control browning, while also providing some cohesion and adhesion and/or coloring agents (e.g. starch, whey, dextrose) to improve color. One skilled in the art may alter the ingredients and ratios in the starch slurry to optimize product attributes.

The coated food is fried in oil and/or fat. The frying may be par-frying or full frying using processes, times and temperatures known in the art. If par-fried, the par-fried food product may be finished by frying or any other method known in the art, including convection or conduction heating such as in an oven. The coated food may also be frozen for later frying or finishing, either with or without par-frying, using techniques known in the art.

The resultant fried foods contain a reduction of fat of at least about 30%, particularly at least about 32%, most particularly at least about 35%, by weight of the fried food. Further, the fried food has similar organoleptic properties to the regular fat content fried food, including color, texture, mouth feel, bite, gloss and appearance.

ADDITIONAL EMBODIMENTS

The following embodiments are presented to further illustrate and explain the present invention and should not be taken as limiting in any regard.

1. A fried composition which comprises:

    a) a food portion;
    b) at least one starch succinate adhered directly on the food portion.

2. The composition of embodiment 1, wherein the starch has been converted.
3. The composition of embodiment 1, wherein the starch succinate has a water fluidity of at least about 30 and no more than about 85.
4. The composition of embodiment 1, wherein the starch succinate has a water fluidity of at least about 50 and no more than about 85.
5. The composition of embodiment 1, wherein the starch has been treated with succinic anhydride at a level of at least about 1% and no more than about 4%.
6. The composition of embodiment 1, wherein the starch has been treated with succinic anhydride at a level of at least about 2.5% and no more than about 4%.
7. The composition of embodiment 1, wherein the starch has been pregelatinized.
8. The composition of embodiment 1. further comprising at least one non-succinated starch adhered directly on the food portion or on the starch succinate.
9. The composition of embodiment 1, in which the composition is a fried or par-fried food.
10. The composition of embodiment 1, wherein the composition has a reduced fat content relative to an uncoated composition.
11. The composition of embodiment 1, wherein the composition has a reduced fat content of at least about 30% by weight of the composition.
12. The composition of embodiment 1, wherein the composition is selected from the group consisting of fish, meat, poultry, meat-substitute, cheese, breads, fruit and vegetable.
13. The composition of embodiment 1, wherein the composition is a fried potato product.
14. A process of preparing the fried food composition of embodiment 1 comprising:

    a) blanching a food portion in water containing from at least about 0.1% to no more than about 0.8% cations by weight
    b) applying at least one succinated starch to the blanched food portion; and
    c) frying and/or par-frying the coated food portion.

15. The process of embodiment 14, wherein the coated food portion is par-fried in (c) and further comprising (d) freezing the par-fried coated food portion to form a frozen food portion.
16. The process of embodiment 15, further comprising (f) reconstituting the frozen food portion.
17. The process of embodiment 16, wherein reconstitution is by frying.
18. The process of embodiment 16, wherein reconstitution is by oven heating.
19. A food composition prepared by the process of embodiment 14.
20. A process of preparing the fried food composition of embodiment 1 comprising:

    a) blanching a food portion in water containing from at least about 0.1% to no more than about 0.8% cations by weight, and at least one succinated starch; and
b) frying and/or par-frying the coated food portion.

21. The process of embodiment 20, further comprising applying at least one coating comprising at least one starch to the blanched, succinated food portion.
22. A food composition prepared by the process of embodiment 21.

EXAMPLES

The following examples are presented to further illustrate and explain the present invention and should not be taken as limiting in any regard. All percents used are on a weight/weight basis.

The following test procedures are used throughout the examples:

Fat (oil) content - Total fat content was determined using supercritical carbon dioxide extraction in the LECO TFE 2000 (Leco Corporation, St. Josephs MI). Fries were frozen (-20°C) after final frying for a minimum of 12 hours. Frozen fries were macerated in a Waring blender. Fat analysis was performed in duplicate and reported as an average percent (w/w) on a wet solids basis.
Percent fat reduction - Percent fat reduction is determined by the following formula:

$$\% \text{ Fat Reduction} = \frac{(\% \text{ fat in control product} - \% \text{ fat in the experimental product})}{\% \text{ fat in control product}}$$

Example 1 - Preparation of a starch succinate derivative

a. A total of 500 grams of potato starch (wf = 80) was slurried into 750 grams of tap water until uniform. The pH was adjusted to 8.0 with 3% NaOH using an automatic pH controller. Fresh succinic anhydride was ground to a fine powder using a motor and pestle. 12.5 g of the freshly ground powder was weighed out and added slowly to the stirring reaction over about 30 minutes by carefully sprinkling the powder onto the surface of the reaction. As the anhydride was added the pH dropped, indicating that a reaction was occurring and triggering the pH controller to add 3% NaOH to the reaction to maintain the pH. After the addition of all the succinic anhydride was completed, the reaction was allowed to stir with pH control until the pH became stable (no change in pH for 5 minutes without the addition of more NaOH). The pH was then adjusted to 4.0 - 4.5 by addition of dilute HCl. The starch sample was then filtered, washed with water (3 x 500 mLs) and allowed to air dry at room temperature.
b. Example 1a was repeated using waxy corn starch (wf=85) in place of the potato starch.
c. Example 1a was repeated using waxy sago starch (wf=70) in place of the potato starch.
d. Example 1a was repeated using converted high amylose (70%) corn starch in place of the potato starch.
e. Example 1a was repeated using waxy com starch (wf=50) in place of the potato starch.
f. Example 1a was repeated using 4% succinic anhydride instead of 2.5%.
g. Example 1c was repeated using 4% succinic anhydride instead of 2.5%.
h. Example 1b was repeated using 4% succinic anhydride instead of 2.5%.

Example 2 - Preparation of Reduced Oil French Fries

Fresh potatoes were rinsed, peeled, and sliced into 0.375 inch (9.5 mm) X 0.375 inch (9.5 mm) X 3 inch (76.2mm) strips. The potato strips were then rinsed in cold water to remove starch and sugars. The strips were blanched at 70-75°C for 11 minutes in a 0.625% calcium chloride dihydrate solution and dried to a moisture loss of about 13-16% by weight. The blanched potato strips were then soaked in a 5% starch succinate cook (pre-heated at 71°C, then cooled to approx. 49°C) and dried to a moisture loss of about 18-22% by weight. The coated strips were then par-fried in vegetable oil at 365°C for 45 seconds and frozen at -20°C.
The frozen, coated strips were finished by frying at 365°C for 2 minutes and 30 seconds.

A. A control (Control A) was made in which the potato strips were not soaked in a starch succinate solution, and were blanched in water without added $CaCl_2$. Otherwise, the above process was followed.
B. A starch control (Control B) was made in which the potato strips were blanched in water without added $CaCl_2$, soaked in a non-succinated starch solution. Otherwise, the above process was followed.

The french fries were tested for fat content, texture and appearance. The results are shown in Table I, below. French fry texture was evaluated immediately (within 2 minutes) after final frying, and after 10 minutes under the heat lamp. Criteria used included crispiness (snap, hold), bite (tender or tough, clean) and heat lamp tolerance. Appearance was judged after approximately 5 minutes after final frying, and included surface, color, finish, evenness, oiliness (bad), clumping (bad) and shine (bad).

Table I

| Sample | %Fat (%reduction) | Texture | Appearance |
|---|---|---|---|
| Control A | 10.9 | Good | Good |
| Control B | 9.0 (17) | Good | Good |
| Ex. 1A | 7.3 (33) | Good | Good |

As can be seen from Table I, the succinate coated fries had significant fat reduction, with acceptable texture and appearance.

Example 3 - Effect of various starches and level of succinate

All the starch succinates are made by the process detailed in example 1 (above). Different base starches were used, and different levels of substitution of succinates. Results are shown in Table 2.

Table 2:

| Sample | %Fat (%reduction) | Texture | Appearance |
|---|---|---|---|
| Control A | 10.9 | Good | Good |
| Ex 1B | 7.3 (33) | Good | Good |
| Ex. 1D | 7.5 (31 ) | Good | Good |
| Ex. 1 E | 7.8 (28) | Good | Good |
| Ex. 1A | 7.2 (33.9) | Good | Good |
| Ex. 1C | 6.8 (37.3) | Good | Good |
| Ex. 1 F | 6.5 (40.4) | Good | Good |
| Ex. 1H | 7.15 (34.4) | Good | Good |
| Ex. 1G | 6.1 (44,4) | Good | Good |

Results show that all starch bases may be used, and that higher levels of succinates resulted low fat content of the french fries.

Example 4: Effect of Calcium Level

Table 3:

| Sample | %Fat (%reduction) | Texture | Appearance |
|---|---|---|---|
| Control A | 10.9 | Good | Good |
| Ex 1F | 6.5 (40.4) | Good | Good |
| Ex. 1F, No Calcium | 8.0 (27) | Excellent | Excellent |

Example 5: Effect of application method

Starch was added directly to the blanch water at a level of 5% w/wt blanch water. After blanching, the fries were processed as described above. Results are shown in Table 4.

Table 4:

| Sample | %Fat (%reduction) | Texture | Appearance |
|---|---|---|---|
| Control A | 10.9 | Good | Good |
| Ex. 1F. | 6.5 (40.4) | Good | Good |
| Ex. 1F,5% in blanch water | 6.9 (36) | Good | Good |

Example 6: Effect of Additional Starch Batter

After drying of the succinate film, an additional starch batter may be applied without negatively impacting the fat content. The starch coating is applied by dipping the potato strip just prior to par-frying in a high solids starch slurry, known to those skilled in the art to improve heat lamp tolerance and enhance crispiness. Results are shown in Table 5.

Table 5:

| Sample | %Fat (%reduction) | Texture | Appearance |
|---|---|---|---|
| Control A | 10.9 | Good | Good |
| Ex. 1 F | 6.5 (40.4) | Good | Good |
| Ex. 1 F with addt'l starch batter | 6.7(39) | Excellent | Excellent |

**Claims**

1.  A fried composition which comprises:

    c) a food portion;
    d) at least one starch succinate adhered directly on the food portion.

2.  The composition of claim 1, wherein the starch has been converted.

3.  The composition of claim 1 or 2, wherein the starch succinate has a water fluidity of at least about 30 and no more than about 85.

4.  The composition of any one of claims 1-3, wherein the starch succinate has a water fluidity of at least about 50 and no more than about 85.

5.  The composition of any one of claims 1-4, wherein the starch has been treated with succinic anhydride at a level of at least about 1% and no more than about 4%.

6.  The composition of any one of claims 1-4, wherein the starch has been treated with succinic anhydride at a level of at least about 2.5% and no more than about 4%.

7.  The composition of any one of claims 1-6, wherein the starch has been pregelatinized.

8.  The composition of any one of claims 1-7, further comprising at least one non-succinated starch adhered directly on the food portion or on the starch succinate,

9.  The composition of any one of claims 1-8, in which the composition is a fried or par-fried food.

10. The composition of any one of claims 1-9, wherein the composition has a reduced fat content relative to an uncoated composition.

11. The composition of any one of claims 1-10, wherein the composition has a reduced fat content of at least about 30% by weight of the composition.

**12.** The composition of any one of claims 1-11, wherein the composition is selected from the group consisting of fish, meat, poultry, meat-substitute, cheese, breads, fruit and vegetable.

**13.** The composition of any one of claims 1-12, wherein the composition is a fried potato product.

**14.** A process of preparing the fried food composition of claim1 comprising:

d) blanching a food portion in water containing from at least about 0.1 % to no more than about 0.8% cations by weight
e) applying at least one succinated starch to the blanched food portion; and
f) frying and/or par-frying the coated food portion.

**15.** The process of claim 14, wherein the coated food portion is par-fried in (c) and further comprising (d) freezing the par-fried coated food portion to form a frozen food portion.

**16.** The process of claim 15, further comprising (f) reconstituting the frozen food portion.

**17.** The process of claim 16, wherein reconstitution is by frying.

**18.** The process of claim 16, wherein reconstitution is by oven heating.

**19.** A food composition prepared by the process of any one of claims 14-18.

**20.** A process of preparing the fried food composition of claim 1 comprising:

c) blanching a food portion in water containing from at least about 0,1% to no more than about 0.8% cations by weight, and at least one succinated starch; and
d) frying and/or par-frying the coated food portion.

**21.** The process of claim 20, further comprising applying at least one coating comprising at least one starch to the blanched, succinated food portion.

**22.** A food composition prepared by the process of claim 21.

**European Patent Office**

# EUROPEAN SEARCH REPORT

Application Number

EP 04 01 9486

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| P,X | EP 1 430 788 A (NAT STARCH CHEM INVEST) 23 June 2004 (2004-06-23) * paragraph [0018]; claims 1,7-16 * ----- | 1,2,9-22 | A23L1/217 A23L1/00 A23L1/01 C09J103/06 |
| A | US 3 424 591 A (GOLD WILLIAM L) 28 January 1969 (1969-01-28) * the whole document * ----- | | |
| A | US 5 279 840 A (BARRIER WILLIAM A ET AL) 18 January 1994 (1994-01-18) * the whole document * ----- | | |
| D,A | US 5 620 727 A (CAROSINO LAWRENCE E ET AL) 15 April 1997 (1997-04-15) * the whole document * ----- | | |
| D,A | US 5 648 110 A (WOERMAN JOHN HAROLD ET AL) 15 July 1997 (1997-07-15) * the whole document * ----- | | |
| D,A | US 5 601 861 A (KRESL KAY ET AL) 11 February 1997 (1997-02-11) * the whole document * ----- | | TECHNICAL FIELDS SEARCHED (Int.Cl.7) A23L C09J |

The present search report has been drawn up for all claims

| Place of search | Date of completion of the search | Examiner |
|---|---|---|
| Munich | 19 November 2004 | Adechy, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 04 01 9486

This annex lists the patent family members relating to the patent documents cited in  the above-mentioned European search report.
The members are as contained in the European Patent Office EDP file on
The European Patent Office is in no way liable for these particulars which are merely  given for the purpose of information.

19-11-2004

| Patent document cited in search report | | Publication date | Patent family member(s) | | Publication date |
|---|---|---|---|---|---|
| EP 1430788 | A | 23-06-2004 | US | 2004121046 A1 | 24-06-2004 |
| | | | EP | 1430788 A1 | 23-06-2004 |
| US 3424591 | A | 28-01-1969 | BE | 682306 A | 09-12-1966 |
| | | | DE | 1692608 A1 | 16-03-1972 |
| | | | GB | 1079628 A | 16-08-1967 |
| | | | NL | 6607875 A | 12-12-1966 |
| US 5279840 | A | 18-01-1994 | CA | 2137669 A1 | 23-12-1993 |
| | | | DE | 69308557 D1 | 10-04-1997 |
| | | | DE | 69308557 T2 | 12-06-1997 |
| | | | EP | 0645968 A1 | 05-04-1995 |
| | | | WO | 9325092 A1 | 23-12-1993 |
| US 5620727 | A | 15-04-1997 | US | 6290999 B1 | 18-09-2001 |
| | | | AU | 658586 B2 | 27-04-1995 |
| | | | AU | 8804191 A | 28-05-1992 |
| | | | CA | 2055884 A1 | 22-05-1992 |
| | | | DE | 69126099 D1 | 19-06-1997 |
| | | | DE | 69126099 T2 | 15-01-1998 |
| | | | EP | 0487340 A1 | 27-05-1992 |
| | | | ES | 2102390 T3 | 01-08-1997 |
| | | | JP | 3073073 B2 | 07-08-2000 |
| | | | JP | 6090681 A | 05-04-1994 |
| | | | KR | 243552 B1 | 02-03-2000 |
| | | | MX | 9102169 A1 | 01-01-1993 |
| US 5648110 | A | 15-07-1997 | CA | 2178273 A1 | 07-12-1996 |
| | | | US | 5750168 A | 12-05-1998 |
| US 5601861 | A | 11-02-1997 | AU | 706421 B2 | 17-06-1999 |
| | | | AU | 5993196 A | 18-12-1996 |
| | | | BR | 9608748 A | 25-04-2000 |
| | | | CA | 2222660 A1 | 05-12-1996 |
| | | | EP | 0831721 A1 | 01-04-1998 |
| | | | JP | 2000510322 T | 15-08-2000 |
| | | | NO | 975468 A | 20-01-1998 |
| | | | WO | 9638054 A1 | 05-12-1996 |
| | | | US | 6261618 B1 | 17-07-2001 |

EPO FORM P0459

For more details about this annex : see Official Journal of the  European Patent Office, No. 12/82